# FASCICULE DE BREVET EUROPEEN

(11) **EP 1 660 406 B1**
(45) Date de publication et mention de la délivrance du brevet: **14.11.2018**
(21) Numéro de dépôt: 04787292.4
(22) Date de dépôt: 02.09.2004
(51) Int. Cl.: C01G 25/00

(54) **COMPOSITION A BASE D 'OXYDE DE CERIUM ET D 'OXYDE DE ZIRCONIUM A CONDUCTIBILITE ET SURFACE ELEVEES, PROCEDES DE PREPARATION ET UTILISATION COMME CATALYSEUR**
AUF CERIUM- UND ZIRKONIUMOXID BASIERENDE ZUSAMMENSETZUNG MIT ERHÖHTER LEITFÄHIGKEIT UND VERGRÖSSERTER OBERFLÄCHE, VERFAHREN ZUR HERSTELLUNG, SOWIE VERWENDUNG ALS KATALYSATOR
COMPOSITION BASED ON CERIUM OXIDE AND ON ZIRCONIUM OXIDE HAVING A HIGH REDUCIBILITY AND LARGE SURFACE AREA, METHODS FOR THE PREPARATION THEREOF AND USE AS A CATALYST

(30) Priorité: 04.09.2003 FR 0310471
(43) Date de publication de la demande: 31.05.2006
(73) Titulaire: Rhodia Operations, 75009 Paris (FR)
(72) Inventeur: LARCHER, Olivier, 17180 Peregny (FR); ROHART, Emmanuel, 17138 Puilboreau (FR)
(74) Mandataire: Senninger, Thierry
(86) Numéro de dépôt international: PCT/FR2004/002237
(87) Numéro de publication internationale: WO 2005/023728

(56) Documents cités:
- EP-A- 0 955 267
- EP-A- 1 053 779
- WO-A-98/16472
- WO-A-03/020643
- FR-A- 2 756 819
- VIDMAR P ET AL: "Effects of Trivalent Dopants on the Redox Properties of Ce0.6Zr0.4O2Mixed Oxide" JOURNAL OF CATALYSIS, ACADEMIC PRESS, DULUTH, MN, US, vol. 171, no. 1, 1 octobre 1997 (1997-10-01), pages 160-168, XP004468793 ISSN: 0021-9517
- DATABASE CA CHEMICAL ABSTRACT, COLOMBUS,OHIO,USA; AN 134:314693 2000, YANG ZHIBO ET. AL: "CeO2-ZrO2 solid solutions prepared by modified sol-gel method and their characteristics" XP002199922

## Description

La présente invention concerne une composition à base d'oxyde de cérium et d'oxyde de zirconium à réductibilité et surface élevées, ses procédés de préparation et son utilisation comme catalyseur.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction notamment des oxydes d'azote également présents dans ces gaz (catalyseurs "trois voies"). L'oxyde de zirconium et l'oxyde de cérium apparaissent aujourd'hui comme deux constituants particulièrement importants et intéressants pour ce type de catalyseurs. Pour être efficaces, ces catalyseurs doivent présenter une surface spécifique importante même à température élevée.

Une autre qualité requise pour ces catalyseurs est la réductibilité. On entend par réductibilité, ici et pour le reste de la description, la capacité du catalyseur à se réduire en atmosphère réductrice et à se réoxyder en atmosphère oxydante. Cette réductibilité peut se mesurer par exemple par une consommation d'hydrogène dans un domaine de températures donné. Elle est due au cérium dans le cas des compositions du type de celles de l'invention, le cérium ayant la propriété de se réduire ou de s'oxyder. Cette réductibilité doit, bien sûr, être la plus élevée possible.

Or, dans l'état actuel de la technique, il apparaît que ces deux caractéristiques sont souvent difficiles à concilier, en particulier pour les compositions à teneur élevée en cérium, c'est à dire qu'une réductibilité élevée dans une composition a pour contrepartie une surface spécifique plutôt faible.

Ainsi, D1 (J. Catal. 1997, 171(1), 160-168) décrit des compositions à base d'oxyde de cérium et de zirconium mais ne présentant pas la combinaison visée.

D2 (EP 0955267) décrit des compositions à base d'oxyde de cérium et de zirconium qui sont riches en zirconium (Ce/Zr<1).

D3 (WO 03020643) ne décrit pas de réductibilitée d'au moins 70%.

Dans ce but, la composition selon l'invention est à base d'oxyde de cérium et d'oxyde de zirconium dans une proportion atomique Ce/Zr d'au moins 1 et elle est caractérisée en ce qu'elle présente en combinaison un taux de réductibilité d'au moins 70% et une surface d'au moins 15 m²/g, la réductibilité étant déterminée par une mesure de la consommation d'hydrogène mesurée entre 200 et 900°C.

L'invention concerne aussi un procédé de préparation de la composition telle que définie ci-dessus qui, selon une première variante, est caractérisé en ce qu'il comprend les étapes suivantes :
- (a) on forme un mélange comprenant des composés de cérium et de zirconium;
- (b) on met en présence ledit mélange avec un composé basique ce par quoi on obtient un précipité;
- (c) on chauffe en milieu aqueux ledit précipité; puis
- (d) soit on ajoute d'abord un additif, choisi parmi les tensioactifs anioniques, les tensioactifs non ioniques, les polyéthylène-glycols, les acides carboxyliques et leurs sels et les tensioactifs du type éthoxylats d'alcools gras carboxyméthylés au milieu issu de l'étape précédente et on sépare ensuite éventuellement ledit précipité;
- (d') soit on sépare d'abord ledit précipité et on ajoute ensuite ledit additif au précipité;
- (e) on soumet à un broyage le précipité obtenu à l'étape précédente;
- (f) on calcine le précipité ainsi obtenu sous gaz inerte ou sous vide, dans un premier temps, à une température d'au moins 850°C puis sous atmosphère oxydante, dans un second temps, à une température d'au moins 400°C.

L'invention concerne en outre un autre procédé de préparation, selon une deuxième variante, qui est caractérisé en ce qu'il comprend les étapes suivantes :
- (a) on forme un mélange comprenant des composés de cérium, de zirconium et, éventuellement, d'un élément précité;
- (b) on chauffe le mélange ce par quoi on obtient un précipité;
- (c) soit on ajoute d'abord un additif, choisi parmi les tensioactifs anioniques, les tensioactifs non ioniques, les polyéthylène-glycols, les acides carboxyliques et leurs sels et les tensioactifs du type éthoxylats d'alcools gras carboxyméthylés au milieu issu de l'étape précédente et on sépare ensuite éventuellement ledit précipité;

- (c') soit on sépare d'abord ledit précipité et on ajoute ensuite ledit additif au précipité;
- (d) on soumet à un broyage le précipité obtenu à l'étape précédente;
- (e) on calcine le précipité ainsi obtenu sous gaz inerte ou sous vide dans un premier temps à une température d'au moins 850°C puis sous atmosphère oxydante dans un second temps à une température d'au moins 400°C.

D'autres caractéristiques, détails et avantages de l'invention apparaîtront encore plus complètement à la lecture de la description qui va suivre, ainsi que des divers exemples concrets mais non limitatifs destinés à l'illustrer.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT-TELLER décrite dans le périodique "The Journal of the American Chemical Society, 60, 309 (1938)".

Par lanthanides, on entend les éléments du groupe constitué par l'yttrium et les éléments de la classification périodique de numéro atomique compris inclusivement entre 57 et 71.

On précise pour la suite de la description que, sauf indication contraire, dans les fourchettes de valeurs qui sont données, les valeurs aux bornes sont incluses.

Les teneurs sont données en oxydes sauf indication contraire. L'oxyde de cérium est sous forme d'oxyde cérique.

Les compositions de l'invention sont du type oxydes mixtes, à base d'oxyde de cérium et d'oxyde de zirconium. Elles peuvent comprendre aussi au moins un autre élément choisi parmi les lanthanides autres que le cérium. On peut donc avoir dans ce cas des compositions ternaires ou quaternaires notamment. L'élément précité peut être plus particulièrement choisi parmi le lanthane, le néodyme ou le praséodyme.

Le rapport atomique Ce/Zr est d'au moins 1. Ce rapport peut être plus particulièrement compris entre 1 et 1,4.

La teneur en oxyde de lanthanide autre que le cérium est généralement d'au plus 20%, en masse, par rapport à l'ensemble de la composition. Cette teneur peut être plus particulièrement d'au plus 15% et encore plus particulièrement d'au plus 10%. Elle est aussi habituellement d'au moins 1% et plus particulièrement d'au moins 5%.

Les compositions de l'invention présentent comme caractéristique principale une réductibilité élevée qui se traduit par un taux de réductibilité d'au moins 70%, de préférence d'au moins 75%. La réductibilité des compositions est déterminée par la mesure de leur consommation d'hydrogène mesurée entre 200°C et 900°C. Cette mesure est faite par réduction programmée en température en utilisant de l'hydrogène dilué dans l'argon. On détecte un signal avec un détecteur de conductivité thermique. La consommation de l'hydrogène est calculée à partir de la surface manquante du signal d'hydrogène de la ligne de base à 200°C à la ligne de base à 900°C. Le taux de réductibilité représente le pourcentage de cérium réduit, étant entendu qu'1/2 mole d'H₂ consommée et mesurée par la méthode décrite plus haut correspond à 1 mole de CelV réduit.

En outre, les compositions de l'invention possèdent une surface spécifique importante. Plus précisément, cette surface est d'au moins 15 m²/g, de préférence d'au moins 20 m²/g. Cette surface peut notamment être comprise entre 15 m²/g et 60 m²/g, notamment entre 20 m²/g et 60 m²/g. La surface varie d'une manière inverse par rapport au taux de réductibilité. Ainsi pour un taux de 99%, la surface sera égale à 15 m²/g ou au voisinage de cette valeur alors que pour un taux de 70% ou plus, la valeur de la surface se rapprochera de 60 m²/g. Les valeurs de surface données ci-dessus sont celles mesurées sur le produit tel qu'obtenu à l'issue des procédés qui seront décrits plus bas.

Selon une autre caractéristique, les compositions peuvent se présenter avantageusement sous forme d'une solution solide. Les diagrammes de diffraction X de ces compositions révèlent dans ce cas, au sein de ces dernières, l'existence d'une seule phase pure ou homogène. Cette phase correspond en fait à une structure cristalline de type fluorine tout comme l'oxyde cérique CeO₂ cristallisé, et dont les paramètres de mailles sont plus ou moins décalés par rapport à un oxyde cérique pur, traduisant ainsi l'incorporation du zirconium et, le cas échéant, de l'autre élément dans le réseau cristallin de l'oxyde de cérium et donc l'obtention d'une solution solide vraie.

Selon un mode de réalisation particulier, les compositions de l'invention peuvent enfin comprendre au moins un métal précieux dont la caractéristique est d'avoir été introduit lors de la préparation même des compositions. Ce métal peut être choisi notamment parmi le platine, le rhodium, le palladium, l'iridium, l'argent ou l'or. Ce mode de réalisation présente l'avantage de conduire à des produits pour lesquels la température maximale de réductibilité est fortement abaissée. La température maximale de réductibilité correspond à la température à laquelle le captage de l'hydrogène est maximal. Ceci permet d'avoir des catalyseurs dont les performances sont élevées dans des gammes de températures plus faibles. La quantité de métal est généralement d'au moins 10ppm en poids de métal par rapport au poids de l'ensemble de la composition. Une quantité inférieure de métal risque de ne pas produire d'effet significatif. La quantité maximale de métal n'est pas critique. Elle est généralement d'au plus 5% en poids, une quantité supérieure est sans intérêt compte tenu du coût du métal.

Les différentes variantes du procédé de préparation des compositions de l'invention vont maintenant être décrites.

Comme indiqué plus haut, le procédé selon la première variante comporte une première étape qui consiste à préparer un mélange en milieu liquide d'un composé du cérium, d'un composé du zirconium et éventuellement d'au moins un composé de l'élément précité supplémentaire.

Le mélange se fait généralement dans un milieu liquide qui est l'eau de préférence. Les composés sont de préférence des composés solubles. Ce peut être notamment des sels de zirconium, de cérium et de lanthanide. Ces composés peuvent être choisis parmi les nitrates, les sulfates, les acétates, les chlorures, les nitrates céri-ammoniacaux. A titre d'exemples, on peut ainsi citer le sulfate de zirconium, le nitrate de zirconyle ou le chlorure de zirconyle. Le nitrate de zirconyle est utilisé le plus généralement. On peut citer aussi notamment les sels de cérium IV tels que nitrates ou nitrates céri-ammoniacaux par exemple, qui conviennent ici particulièrement bien. On peut utiliser du nitrate cérique. Il est avantageux d'utiliser des sels de pureté d'au moins 99,5% et plus particulièrement d'au moins 99,9%. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniaque en présence d'eau oxygénée. On peut également, en particulier, utiliser une solution de nitrate cérique obtenue selon le procédé d'oxydation électrolytique d'une solution de nitrate céreux tel que décrit dans le document FR-A- 2 570 087, et qui constitue ici une matière première intéressante.

On notera ici que les solutions aqueuses de sels de cérium et de sels de zirconyle peuvent présenter une certaine acidité libre initiale qui peut être ajustée par l'addition d'une base ou d'un acide. Il est cependant autant possible de mettre en oeuvre une solution initiale de sels de cérium et de zirconium présentant effectivement une certaine acidité libre comme mentionné ci-dessus, que des solutions qui auront été préalablement neutralisées de façon plus ou moins poussée. Cette neutralisation peut se faire par addition d'un composé basique au mélange précité de manière à limiter cette acidité. Ce composé basique peut être par exemple une solution d'ammoniaque ou encore d'hydroxydes d'alcalins (sodium, potassium,...), mais de préférence une solution d'ammoniaque.

On notera enfin que lorsque le mélange de départ contient un composé du cérium dans lequel celui-ci est sous forme de Ce III, il est préférable de faire intervenir dans le cours du procédé un agent oxydant, par exemple de l'eau oxygénée. Cet agent oxydant peut être utilisé en étant ajouté au milieu réactionnel lors de l'étape (a) ou lors de l'étape (b), notamment à la fin de celle-ci.

Il est aussi possible d'utiliser un sol comme composé de départ du zirconium ou du cérium. Par sol on désigne tout système constitué de fines particules solides de dimensions colloïdales, c'est à dire des dimensions comprises entre environ 1 nm et environ 500 nm, à base d'un composé de zirconium ou de cérium ce composé étant généralement un oxyde et/ou un oxyde hydraté de zirconium ou de cérium, en suspension dans une phase liquide aqueuse, lesdites particules pouvant en outre, éventuellement, contenir des quantités résiduelles d'ions liés ou adsorbés tels que par exemple des nitrates, des acétates, des chlorures ou des ammoniums. On notera que dans un tel sol, le zirconium ou le cérium peuvent se trouver soit totalement sous la forme de colloïdes, soit simultanément sous la forme d'ions et sous la forme de colloïdes.

Le mélange peut être indifféremment obtenu soit à partir de composés initialement à l'état solide que l'on introduira par la suite dans un pied de cuve d'eau par exemple, soit encore directement à partir de solutions de ces composés puis mélange, dans un ordre quelconque, desdites solutions.

Dans la deuxième étape (b) du procédé, on met en présence ledit mélange avec un composé basique. Cette mise en présence entraîne la formation d'un précipité. On peut utiliser comme base ou composé basique les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée. Le composé basique est généralement utilisé sous forme d'une solution aqueuse.

La manière d'effectuer la mise en présence du mélange et de la solution, c'est à dire l'ordre d'introduction de ceux-ci n'est pas critique. Toutefois, cette mise en présence peut se faire en introduisant le mélange dans la solution du composé basique. Cette manière de faire est préférable pour obtenir les compositions sous forme de solutions solides.

La mise en présence ou la réaction entre le mélange et la solution, notamment l'addition du mélange dans la solution du composé basique, peut être effectuée en une seule fois, graduellement ou en continu, et elle est de préférence réalisée sous agitation. Elle est de préférence conduite à température ambiante.

L'étape suivante (c) du procédé est l'étape de chauffage du précipité en milieu aqueux. Ce chauffage peut être réalisé directement sur le milieu réactionnel obtenu après réaction avec le composé basique ou sur une suspension obtenue après séparation du précipité du milieu réactionnel, lavage éventuel et remise dans l'eau du précipité. La température à laquelle est chauffé le milieu est d'au moins 100°C et encore plus particulièrement d'au moins 130°C.

L'opération de chauffage peut être conduite en introduisant le milieu liquide dans une enceinte close (réacteur fermé du type autoclave). Dans les conditions de températures données ci-dessus, et en milieu aqueux, on peut préciser, à titre illustratif, que la pression dans le réacteur fermé peut varier entre une valeur supérieure à 1 Bar (10⁵ Pa) et 165 Bar (1,65. 10⁷ Pa), de préférence entre 5 Bar (5. 10⁵ Pa) et 165 Bar (1,65. 10⁷ Pa). On peut aussi effectuer le chauffage dans un réacteur ouvert pour les températures voisines de 100°C. Le chauffage peut être conduit soit sous air, soit sous atmosphère de gaz inerte, de préférence l'azote. La durée du chauffage peut varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

Le milieu soumis au chauffage présente généralement un pH d'au moins 5. De préférence, ce pH est basique, c'est à dire qu'il est supérieur à 7 et, plus particulièrement, d'au moins 8.

Il est possible de faire plusieurs chauffages. Ainsi, on peut remettre en suspension dans l'eau, le précipité obtenu après l'étape de chauffage et éventuellement un lavage puis effectuer un autre chauffage du milieu ainsi obtenu. Cet autre chauffage se fait dans les mêmes conditions que celles qui ont été décrites pour le premier.

L'étape suivante du procédé peut se faire selon deux modes de réalisations. Selon un premier mode de réalisation, on ajoute au milieu réactionnel issu de l'étape précédente un additif qui est choisi parmi les tensioactifs anioniques, les tensioactifs non ioniques, les polyéthylène-glycols, les acides carboxyliques et leurs sels et les tensioactifs du type éthoxylats d'alcools gras carboxyméthylés. En ce qui concerne cet additif on pourra se référer à l'enseignement de la demande WO-98/45212 et utiliser les tensioactifs décrits dans ce document. On peut mentionner comme tensioactifs du type anionique les éthoxycarboxylates, les acides gras éthoxylés ou propoxylés, notamment ceux de la marque ALKAMULS®, les sarcosinates de formule R-C(O)N(CH₃)CH₂COO⁻, les bétaïnes de formule RR'NH-CH₃-COO⁻, R et R' étant des groupes alkyles ou alkylaryles, les esters phosphates, notamment ceux de la marque RHODAFAC®, les sulfates comme les sulfates d'alcool les sulfates d'éther alcool et les éthoxylats d'alcanolamide sulfatés, les sulfonates comme les sulfosuccinates, les alkyl benzène ou alkyl naphtalène sulfonates.

Comme tensioactif non ionique, on peut mentionner les tensioactifs acétyléniques, les alcools gras éthoxylés ou propoxylés, par exemple ceux des marques RHODASURF® ou ANTAROX®, les alcanolamides, les oxydes d'amine, les alcanolamides éthoxylés, les amines éthoxylées ou propoxylées à longues chaînes, par exemple ceux de la marque RHODAMEEN®, les copolymères oxyde d'éthylène/oxide de propylène, les dérivés du sorbitan, l'éthylène glycol, le propylène glycol, le glycérol, les esters polyglycéryle et leurs dérivés éthoxylés, les alkylamines, les alkylimidazolines, les huiles éthoxylées et les alkylphénols éthoxylés ou propoxylés, notamment ceux de la marque IGEPAL®. On peut citer aussi en particulier les produits cités dans WO-98/45212 sous les marques IGEPAL®, DOWANOL®, RHODAMOX® et ALKAMIDE®.

En ce qui concerne les acides carboxyliques, on peut utiliser notamment les acides mono- ou dicarboxyliques aliphatiques et parmi ceux-ci plus particulièrement les acides saturés. On peut utiliser aussi des acides gras et plus particulièrement les acides gras saturés. On peut citer ainsi notamment les acides formique, acétique, proprionique, butyrique, isobutyrique, valérique, caproïque, caprylique, caprique, laurique, myristique, palmitique, stéarique, hydroxystéarique, éthyl-2-hexanoïque et béhénique. Comme acides dicarboxyliques, on peut mentionner les acides oxalique, malonique, succinique, glutarique, adipique, pimélique, subérique, azélaïque et sébacique. Les sels des acides carboxyliques peuvent aussi être utilisés.

Enfin, il est possible d'utiliser un tensioactif qui est choisi parmi ceux du type éthoxylats d'alcools gras carboxyméthylés.

Par produit du type éthoxylats d'alcool gras carboxyméthylés on entend les produits constitués d'alcools gras éthoxylés ou propoxylés comportant en bout de chaîne un groupement CH₂-COOH. Ces produits peuvent répondre à la formule :

R₁-O-(CR₂R₃-CR₄R₅-O)ₙ-CH₂-COOH

dans laquelle R₁ désigne une chaîne carbonée, saturée ou insaturée, dont la longueur est généralement d'au plus 22 atomes de carbone, de préférence d'au moins 12 atomes de carbone; R₂, R₃, R₄ et R₅ peuvent être identiques et représenter l'hydrogène ou encore R₂ peut représenter un groupe CH₃ et R₃, R₄ et R₅ représentent l'hydrogène; n est un nombre entier non nul pouvant aller jusqu'à 50 et plus particulièrement compris entre 5 et 15, ces valeurs étant incluses. On notera qu'un tensio-actif peut être constitué d'un mélange de produits de la formule ci-dessus pour lesquels R₁ peut être saturé et insaturé respectivement ou encore des produits comportant à la fois des groupements - CH₂-CH₂-O- et -C(CH₃)-CH₂-O-.

Après l'addition du tensio-actif, on sépare éventuellement le précipité du milieu liquide par tout moyen connu.

Un autre mode de réalisation consiste à séparer d'abord le précipité issu de l'étape (c) puis à ajouter l'additif tensioactif à ce précipité.

La quantité de tensio-actif utilisée, exprimée en pourcentage en poids d'additif par rapport au poids de la composition calculé en oxyde, est généralement comprise entre 5% et 100% plus particulièrement entre 15% et 60%.

L'étape suivante du procédé consiste à soumettre à un broyage le précipité obtenu à l'étape précédente. Ce broyage peut être réalisé de différentes manières. Une première manière consiste à réaliser un broyage à haute énergie du type broyage humide. Un tel broyage se fait sur le précipité humide qui a été obtenu soit à l'issue de l'étape (d') soit à l'issue de l'étape (d) dans le cas où ce précipité a bien été séparé de son milieu liquide d'origine. Le broyage humide peut se faire dans un broyeur à billes par exemple. Une seconde manière consiste à effectuer un broyage à énergie moyenne en soumettant à un cisaillement une suspension du précipité, par exemple en utilisant un broyeur colloïdal ou une turbine d'agitation. Cette suspension peut être une suspension aqueuse qui a été obtenue après remise en dispersion dans l'eau du précipité obtenu à l'issue des étapes (d) ou (d'). Ce peut être aussi la suspension directement obtenue à la fin de l'étape (d) après l'addition du tensioactif sans qu'il y ait eu une séparation du précipité du milieu liquide.

A l'issue du broyage, le produit obtenu peut éventuellement être séché, par exemple par passage dans une étuve.

La dernière étape du procédé est une étape de calcination. Cette calcination se fait en deux temps. Dans un premier temps, la calcination est conduite sous gaz inerte ou sous vide. Le gaz inerte peut être l'hélium, l'argon ou l'azote. Le vide est généralement un vide primaire avec une pression partielle en oxygène inférieure à 10⁻¹ mbar. La température de calcination est d'au moins 850°C. Une température en deçà de cette valeur risque de ne pas conduire à un produit présentant les caractéristiques données plus haut de réductibilité. L'augmentation de la température de calcination entraîne une augmentation de la réductibilité qui peut atteindre des valeurs de 99% vers les plus hautes températures. La température est en outre fixée à une valeur tenant compte du fait que la surface spécifique du produit est d'autant plus faible que la température de calcination mise en oeuvre est plus élevée. Ainsi, généralement, la température maximale de calcination est d'au plus 1100°C car au-delà la surface spécifique risque d'être insuffisante. La durée de cette première calcination est généralement d'au moins 2 heures de préférence d'au moins 4 heures et notamment d'au moins 6 heures. Une augmentation de cette durée entraîne habituellement une augmentation du taux de réductibilité. Bien entendu, la durée peut être fixée en fonction de la température, une durée de calcination faible nécessitant une température plus élevée.

Dans un deuxième temps, on conduit une seconde calcination sous atmosphère oxydante, par exemple sous air. Dans ce cas, la calcination se fait généralement à une température d'au moins 400°C sur une durée qui est généralement d'au moins 30 minutes. Une température inférieure à 400°C peut rendre difficile l'élimination des additifs utilisés lors des étapes (d) ou (d') décrites plus haut. Il est préférable de ne pas dépasser une température de calcination de 900°C.

Le procédé de préparation peut être aussi mis en oeuvre selon une seconde variante qui va maintenant être décrite. La première étape (a) du procédé selon cette variante est identique à celle du procédé selon la première variante et donc ce qui a été décrit plus haut à ce sujet s'applique de même ici. La seconde étape du procédé, étape (b) est une étape dans laquelle on chauffe le mélange issu de la première étape. La température à laquelle est menée ce chauffage ou traitement thermique, aussi appelé thermohydrolyse, peut être comprise entre 80°C et la température critique du milieu réactionnel en particulier entre 80 et 350°C, de préférence entre 90 et 200°C.

Ce traitement peut être conduit, selon les conditions de températures retenues, soit sous pression normale atmosphérique, soit sous pression telle que par exemple la pression de vapeur saturante correspondant à la température du traitement thermique. Lorsque la température de traitement est choisie supérieure à la température de reflux du mélange réactionnel (c'est à dire généralement supérieure à 100°C), par exemple choisie entre 150 et 350°C, on conduit alors l'opération en introduisant le mélange liquide contenant les espèces précitées dans une enceinte close (réacteur fermé plus couramment appelé autoclave), la pression nécessaire ne résultant alors que du seul chauffage du milieu réactionnel (pression autogène). Dans les conditions de températures données ci-dessus, et en milieux aqueux, on peut ainsi préciser, à titre illustratif, que la pression dans le réacteur fermé varie entre une valeur supérieure à 1 Bar (10⁵ Pa) et 165 Bar (165. 10⁵ Pa), de préférence entre 5 Bar (5. 10⁵ Pa) et 165 Bar (165. 10⁵ Pa). Il est bien entendu également possible d'exercer une pression extérieure qui s'ajoute alors à celle consécutive au chauffage.

Le chauffage peut être conduit soit sous atmosphère d'air, soit sous atmosphère de gaz inerte, de préférence l'azote. La durée du traitement n'est pas critique, et peut ainsi varier dans de larges limites, par exemple entre 1 et 48 heures, de préférence entre 2 et 24 heures.

A l'issue de l'étape de chauffage, on récupère un précipité solide qui peut être séparé de son milieu par toute technique classique de séparation solide-liquide telle que par exemple filtration, décantation, essorage ou centrifugation.

Il peut être avantageux d'introduire après l'étape de chauffage, une base telle que par exemple une solution d'ammoniaque, dans le milieu de précipitation. Ceci permet d'augmenter les rendements de récupération en l'espèce précipitée. Les étapes suivantes du procédé, étapes (c), (c'), (d) et (f) sont identiques respectivement aux étapes (d), (d'), (e) et (f) de la première variante et, là aussi, ce qui a été décrit plus haut à ce sujet s'applique de même.

De manière à obtenir une composition selon le mode de réalisation particulier qui a été décrit plus haut, il est possible d'ajouter au précipité issu de l'étape (d) ou (d') de la première variante ou de l'étape (c) ou (c') de la seconde, un métal précieux qui, comme indiqué précédemment, peut être choisi notamment parmi le platine, le rhodium, le palladium, l'iridium, l'argent ou l'or. Cette addition peut se faire notamment en utilisant la technique d'imprégnation. Les valeurs de surface données plus haut s'appliquent aux compositions issues du procédé selon les deux variantes qui viennent d'être décrites et qui ont été calcinées dans les gammes de températures précitées.

Les compositions de l'invention telles que décrites plus haut ou telles qu'obtenues par le procédé mentionné précédemment se présentent sous forme de poudres mais elles peuvent éventuellement être mises en forme pour se présenter sous forme de granulés, billes, cylindres ou nids d'abeille de dimensions variables. Ces compositions peuvent être appliquées sur tout support utilisé habituellement dans le domaine de la catalyse, c'est à dire notamment des supports inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

Les compositions peuvent aussi être utilisées dans des systèmes catalytiques. Ces systèmes catalytiques peuvent comprendre un revêtement (wash coat) à propriétés catalytiques et à base de ces compositions, sur un substrat du type par exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Ces systèmes catalytiques et plus particulièrement les compositions de l'invention peuvent trouver de très nombreuses applications. Ils sont ainsi particulièrement bien adaptés à, et donc utilisables, dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion, l'oxydation catalytique des suies émises par les moteurs à combustion interne comme les moteurs diesel ou essence fonctionnant en régime pauvre. Les systèmes catalytiques et les compositions de l'invention peuvent enfin être utilisés comme pièges à NOx.

Dans le cas de ces utilisations en catalyse, les compositions de l'invention peuvent être employées en combinaison avec des métaux précieux. La nature de ces métaux et les techniques d'incorporation de ceux-ci dans ces compositions sont bien connues de l'homme du métier. Par exemple, les métaux peuvent être le platine, le rhodium, le palladium ou l'iridium, ils peuvent notamment être incorporés aux compositions par imprégnation.

Parmi les utilisations citées, le traitement des gaz d'échappement des moteurs à combustion interne (catalyse post combustion automobile) constitue une application particulièrement intéressante.

Des exemples vont maintenant être donnés. Les tests d'évaluation qui sont mentionnés ci-dessous ont été conduits dans les conditions suivantes.

### Test catalytique trois voies

Ce test permet d'évaluer dans des conditions dynamiques (fréquence d'oscillation de 1Hz) les performances des catalyseurs trois voies sous forme de poudre vis à vis de l'élimination des polluants CO, NO et hydrocarbures. Plusieurs mesures sont effectuées en isotherme en faisant varier la richesse du mélange gazeux. La température d'évaluation est de 460°C et la masse de catalyseur de 20 mg en mélange avec 150 mg de SiC utilisé comme diluant inerte. Les performances catalytiques sont données en COP (Cross Over Point) qui est défini comme le point d'intersection des courbes de conversion du CO et du NO en fonction de la richesse du mélange. Le test est effectué sur une composition de l'invention qui a été imprégnée par une solution de nitrate de rhodium suivi d'une activation sous air à 500°C 2 heures.

### Taux de réductibilité

Ce taux est calculé en mettant en oeuvre le principe indiqué plus haut en utilisant ici un appareil MI-100 Altamira. Plus précisément, on utilise l'hydrogène comme gaz réducteur à 10% en volume dans l'argon avec un débit de 30 mL/mn. La détection du signal se fait avec un détecteur de conductivité thermique à 70 mA. Le protocole expérimental est le suivant : la masse échantillon pesée est de 200 mg dans un récipient préalablement taré.

L'échantillon est ensuite introduit dans une cellule en quartz contenant dans le fond de la laine de quartz. L'échantillon est enfin recouvert de laine de quartz et positionné dans le four tubulaire de l'appareil de mesure. Le programme de température est le suivant :
- oxydation : montée en température jusqu'à 500°C avec une rampe de montée à 10°C/mn sous O₂ à 5% dans He;
- palier de 30 mn puis descente à 30°C;
- traitement à T = 30°C sous Ar pendant 20 mn;
- réduction : montée en température jusqu'à 900°C avec une rampe de montée à 20°C/mn sous H₂ à 10 % dans Ar;
- calibration;
- traitement sous Ar de 900°C à 30°C.

### EXEMPLE 1

Cet exemple concerne la préparation d'une composition à base d'oxyde de cérium et d'oxyde de zirconium dans les proportions respectives en masse de 58/42. Dans un bécher agité, on introduit 525 ml de nitrate de zirconium (80g/l) et 230 ml d'une solution de nitrate cérique (Ce⁴⁺ = 236,5 g/l, Ce³⁺ = 15,5 g/l et acidité libre = 0,7N). On complète ensuite avec de l'eau distillée de façon à obtenir 1 litre d'une solution de nitrates.

Dans un réacteur agité à fond rond, on introduit 253 ml d'une solution d'ammoniaque et on complète ensuite avec de l'eau distillée de façon à obtenir un volume total de 1 litre. La solution de nitrates est introduite en une heure dans le réacteur sous agitation constante. La solution obtenue est placée dans un autoclave en acier inoxydable équipé d'un mobile d'agitation. La température du milieu est portée à 150°C pendant 2 heures sous agitation.

La suspension ainsi obtenue est alors filtrée sur Büchner. On récupère un précipité contenant 23,4 % en masse d'oxyde. On prélève 100 g de ce précipité.

Parallèlement, on a préparé un gel de laurate d'ammonium dans les conditions suivantes : on introduit 250 g d'acide laurique dans 135 ml d'ammoniaque (12 mol/l) et 500 ml d'eau distillée, puis on homogénéise à l'aide d'une spatule. 28 g de ce gel sont ajoutés à 100 g du précipité puis l'ensemble est malaxé jusqu'à obtention d'une pâte homogène.

Le produit ainsi obtenu subit ensuite deux calcinations dans les conditions suivantes. La première calcination a lieu sous azote avec un débit de 300 cc/mn à une température de 900°C pendant 4h en palier. Le produit est ensuite ramené à température ambiante. La deuxième calcination est faite dans un mélange à 10% d'oxygène dans l'azote avec un débit de 300 cm³/mn à une température de 500°C pendant 2h en palier. Le produit ainsi obtenu présente une surface de 59 m²/g et un taux de réductibilité de 88 %, la température maximale de réductibilité est de 505°C.

Le test catalytique trois voies indique une conversion de 100% au COP pour un produit imprégné à 0,1% en poids de rhodium.

### EXEMPLE 2

Cet exemple concerne la préparation d'une composition à base d'oxyde de cérium et d'oxyde de zirconium dans les proportions respectives en masse de 58/42. On procède comme dans l'exemple 1 jusqu'à l'obtention de la pâte homogène.

Le produit ainsi obtenu subit ensuite deux calcinations dans les conditions suivantes. La première calcination a lieu sous azote avec un débit de 300 cm³/mn à une température de 1100°C pendant 6h en palier. Le produit est ensuite ramené à température ambiante. La deuxième calcination est faite dans un mélange à 10% d'oxygène dans l'azote avec un débit de 300 cm³/mn à une température de 500°C pendant 2h en palier.

Le produit ainsi obtenu présente une surface de 20 m²/g et un taux de réductibilité de 99 %, la température maximale de réductibilité est de 540°C.

### EXEMPLE 3

Cet exemple concerne la préparation d'une composition à base d'oxyde de cérium, d'oxyde de zirconium, d'oxyde de lanthane et d'oxyde de praséodyme dans les proportions respectives en masse de 60/30/3/7.

Dans un bécher agité, on introduit 375 ml de nitrate de zirconium (80g/l), 121 ml de nitrate de cérium à l'état d'oxydation III (496 g/l), 6,6 ml de nitrate de lanthane (454 g/l) et 14 ml de nitrate de praséodyme (500 g/l). On complète ensuite avec de l'eau distillée de façon à obtenir 1 litre d'une solution de nitrates.

Dans un réacteur agité à fond rond, on introduit 200 ml d'une solution d'ammoniaque (12 mol/l), 302 ml d'eau oxygénée (110 volumes) et on complète ensuite avec de l'eau distillée de façon à obtenir un volume total de 1 litre.

On procède ensuite comme dans l'exemple 1 et la suspension obtenue à l'issue du traitement en autoclave est alors filtrée sur Büchner. On récupère un précipité contenant 30,5 % en masse d'oxyde. On prélève 100 g de ce précipité et on y ajoute 36,5 g d'un gel de laurate d'ammonium préparé comme dans l'exemple 1, jusqu'à obtention d'une pâte homogène.

Le produit ainsi obtenu subit ensuite deux calcinations dans les conditions suivantes. La première calcination a lieu sous azote avec un débit de 300 cm3/mn à une température de 900°C pendant 4h en palier. Le produit est ensuite ramené à température ambiante. La deuxième calcination est faite dans un mélange à 10% d'oxygène dans l'azote avec un débit de 300 cm³/mn à une température de 500°C pendant 2h en palier.

Le produit ainsi obtenu présente une surface de 40 m²/g et un taux de réductibilité de 99 %, la température maximale de réductibilité est de 570°C.

### EXEMPLE 4

Cet exemple concerne la préparation d'une composition à base d'oxyde de cérium et d'oxyde de zirconium dans les proportions respectives en masse de 58/42 et comprenant 100 ppm de palladium introduit lors de la préparation de cette composition. On procède comme dans l'exemple 1 jusqu'à l'obtention de la pâte homogène. La pâte est alors imprégnée à 100 ppm en poids de palladium avec le protocole suivant : le pourcentage d'oxydes totaux (OT) est préalablement déterminé par une mesure de perte au feu. La quantité de solution mère de Pd(NH₃)₄(NO₃)₂ à 4,5% en masse de Pd correspondante est calculée à partir du pourcentage d'OT. Pour une masse de 100 g d'OT à 100 ppm de Pd, il est nécessaire de prélever 0,222 g de solution mère. Ce prélèvement s'effectue en volume à l'aide d'une micropipette. La détermination de la densité de la solution mère se fait par pesée. La densité obtenue est de 1,0779. Le volume de solution mère a prélever est alors de 43 µL. Le volume de solution mère est ensuite introduit dans une fiole de 25mL et étendu avec de l'eau permutée. Cette solution est mise en contact avec la pâte, préalablement mise en suspension dans de l'eau permutée. La solution surnageante est ensuite évaporée lentement sur bain de sable.
Le produit ainsi obtenu subit ensuite deux calcinations dans les conditions suivantes. La première calcination a lieu sous azote avec un débit de 300 cm³/mn à une température de 900°C pendant 4h en palier. Le produit est ensuite ramené à température ambiante. La deuxième calcination est faite dans un mélange à 10% d'oxygène dans l'azote avec un débit de 300 cm³/mn à une température de 500°C pendant 2h en palier.

Le produit ainsi obtenu présente une surface de 62 m²/g et un taux de réductibilité de 88 %, la température maximale de réductibilité est de 230°C.

### EXEMPLE 5 COMPARATIF

On procède comme dans l'exemple 1 jusqu'à l'obtention de la pâte homogène. Le produit est ensuite calciné sous air à une température de 900°C pendant 4h en palier. Le produit ainsi obtenu présente une surface de 49 m²/g et un taux de réductibilité de 63 %, la température maximale de réductibilité est de 560°C. Le test catalytique trois voies indique une conversion de 90% au COP pour un produit imprégné à 0,1% en poids de rhodium.

### EXEMPLE 6 COMPARATIF

On procède comme dans l'exemple 1 jusqu'à l'obtention de la pâte homogène. Le produit est ensuite calciné sous air à une température de 1100°C pendant 6h en palier. Le produit ainsi obtenu présente une surface de 6 m²/g et un taux de réductibilité de 62 %, la température maximale de réductibilité est de 610°C.

### EXEMPLE 7 COMPARATIF

On procède comme dans l'exemple 1 jusqu'à l'obtention de la pâte homogène. Le produit est ensuite calciné dans un mélange gazeux à 10% d'hydrogène dans l'azote et à un débit de 300 cm³/mn à une température de 1100°C pendant 4h en palier. Le produit ainsi obtenu présente une surface de 7 m²/g et un taux de réductibilité de 85 %, la température maximale de réductibilité est de 575°C.

## Revendications

1. Composition à base d'oxyde de cérium et d'oxyde de zirconium dans une proportion atomique Ce/Zr d'au moins 1, **caractérisée en ce qu'**elle présente en combinaison un taux de réductibilité d'au moins 70% et une surface d'au moins 15 m²/g, la réductibilité étant déterminée par une mesure de la consommation d'hydrogène mesurée entre 200 et 900°C.

2. Composition selon la revendication 1, **caractérisée en ce qu'**elle présente un taux de réductibilité d'au moins 75%.

3. Composition selon la revendication 1 ou 2, **caractérisée en ce qu'**elle présente une surface d'au moins 20 m2/g.

4. Composition selon l'une des revendications précédentes, **caractérisée en ce qu'**elle présente une proportion atomique Ce/Zr d'au plus 1,4.

5. Composition selon l'une des revendications précédentes, **caractérisée en ce qu'**elle comprend en outre au moins un autre élément choisi parmi les lanthanides autres que le cérium.

6. Composition selon la revendication 5, **caractérisée en ce que** la teneur en l'autre élément précité est d'au plus 20% et d'au moins 1%, en masse, par rapport à l'ensemble de la composition.

7. Composition selon l'une des revendications précédentes **caractérisée en ce qu'**elle présente une surface comprise entre 15 m²/g et 60 m²/g.

8. Composition selon l'une des revendications précédentes, **caractérisée en ce qu'**elle comprend en outre au moins un métal précieux, choisi notamment parmi le platine, le rhodium, le palladium, l'iridium, l'argent ou l'or.

9. Procédé de préparation d'une composition selon l'une des revendications précédentes, **caractérisé en ce qu'**il comprend les étapes suivantes :
- (a) on forme un mélange comprenant des composés de cérium, de zirconium et, éventuellement, d'un élément précité;
- (b) on met en présence ledit mélange avec un composé basique ce par quoi on obtient un précipité;
- (c) on chauffe en milieu aqueux ledit précipité; puis
- (d) soit on ajoute d'abord un additif, choisi parmi les tensioactifs anioniques, les tensioactifs non ioniques, les polyéthylène-glycols, les acides carboxyliques et leurs sels et les tensioactifs du type éthoxylats d'alcools gras carboxyméthylés au milieu issu de l'étape précédente et on sépare ensuite éventuellement ledit précipité;
- (d') soit on sépare d'abord ledit précipité et on ajoute ensuite ledit additif au précipité;
- (e) on soumet à un broyage le précipité obtenu à l'étape précédente;
- (f) on calcine le précipité ainsi obtenu sous gaz inerte ou sous vide dans un premier temps à une température d'au moins 850°C puis sous atmosphère oxydante dans un second temps à une température d'au moins 400°C.

10. Procédé de préparation d'une composition selon l'une des revendications précédentes, **caractérisé en ce qu'**il comprend les étapes suivantes :
- (a) on forme un mélange comprenant des composés de cérium, de zirconium et, éventuellement, d'un élément précité;
- (b) on chauffe le mélange ce par quoi on obtient un précipité;
- (c) soit on ajoute d'abord un additif, choisi parmi les tensioactifs anioniques, les tensioactifs non ioniques, les polyéthylène-glycols, les acides carboxyliques et leurs sels et les tensioactifs du type éthoxylats d'alcools gras carboxyméthylés au milieu issu de l'étape précédente et on sépare ensuite éventuellement ledit précipité;
- (c') soit on sépare d'abord ledit précipité et on ajoute ensuite ledit additif au précipité;
- (d) on soumet à un broyage le précipité obtenu à l'étape précédente;
- (e) on calcine le précipité ainsi obtenu sous gaz inerte ou sous vide dans un premier temps à une température d'au moins 850°C puis sous atmosphère oxydante dans un second temps à une température d'au moins 400°C.

11. Procédé selon la revendication 9 ou 10, **caractérisé en ce qu'**on utilise comme composés du zirconium, du cérium et de l'élément précité un composé choisi parmi les nitrates, les sulfates, les acétates, les chlorures, les nitrates céri-ammoniacaux.

12. Procédé selon l'une des revendications 9 à 11, **caractérisé en ce que** le chauffage du précipité de l'étape (c) ou du mélange de l'étape (b) est réalisé à une température d'au moins 100°C.

13. Procédé selon l'une des revendications 9 à 12, **caractérisé en ce qu'**on met en oeuvre un broyage humide.

14. Procédé selon l'une des revendications 9 à 13, **caractérisé en ce qu'**on effectue le broyage en soumettant à un cisaillement une suspension du précipité.

15. Procédé selon l'une des revendications 9 à 14, **caractérisé en ce qu'**on ajoute un métal précieux au précipité issu de l'étape (d) ou (d') ou de l'étape (c) ou (c').

16. Procédé selon l'une des revendications 9 à 15, **caractérisé en ce qu'**on effectue la première calcination sous gaz inerte ou sous vide à une température comprise entre 850°C et 1100°C et la seconde calcination sous atmosphère oxydante à une température comprise entre 400°C et 900°C.

17. Système catalytique, **caractérisé en ce qu'**il comprend une composition selon l'une des revendications 1 à 8.

18. Procédé de traitement des gaz d'échappement des moteurs à combustion interne, **caractérisé en ce qu'**on utilise à titre de catalyseur un système catalytique selon la revendication 17 ou une composition selon l'une des revendications 1 à 8.

## Patentansprüche

1. Zusammensetzung auf der Basis von Ceriumoxid und Zirkoniumoxid in einem Atomverhältnis Ce/Zr von mindestens 1, **dadurch gekennzeichnet, dass** diese in Kombination einen Reduzierbarkeitsanteil von mindestens 70 % und eine Oberfläche von mindestens 15 m²/g aufweist, wobei die Reproduzierbarkeit durch eine Messung des Wasserstoffverbrauchs, gemessen zwischen 200 und 900°C, bestimmt wird.

2. Zusammensetzung nach Anspruch 1, **dadurch gekennzeichnet, dass** diese einen Reduzierbarkeitsanteil von mindestens 75 % aufweist.

3. Zusammensetzung nach Anspruch 1 oder 2, **dadurch gekennzeichnet, dass** diese eine Oberfläche von mindestens 20 m²/g aufweist.

4. Zusammensetzung nach einem der vorhergehenden Ansprüche, **dadurch gekennzeichnet, dass** diese ein Atomverhältnis Ce/Zr von höchstens 1,4 aufweist.

5. Zusammensetzung nach einem der vorhergehenden Ansprüche, **dadurch gekennzeichnet, dass** diese außerdem mindestens ein anderes Element umfasst, ausgewählt aus von Cerium verschiedenen Lanthaniden.

6. Zusammensetzung nach Anspruch 5, **dadurch gekennzeichnet, dass** der Gehalt an dem anderen vorgenannten Element höchstens 20 Masse-% und mindestens 1 Masse-%, bezogen auf die Gesamtheit der Zusammensetzung, beträgt.

7. Zusammensetzung nach einem der vorhergehenden Ansprüche, **dadurch gekennzeichnet, dass** diese eine Oberfläche zwischen 15 m²/g und 60 m²/g aufweist.

8. Zusammensetzung nach einem der vorhergehenden Ansprüche, **dadurch gekennzeichnet, dass** diese außerdem ein Edelmetall umfasst, insbesondere ausgewählt aus Platin, Rhodium, Palladium, Iridium, Silber oder Gold.

9. Verfahren zur Herstellung einer Zusammensetzung nach einem der vorhergehenden Ansprüche, **dadurch gekennzeichnet, dass** dieses die folgenden Schritte umfasst:
- (a) eine Mischung, umfassend Cerium-, Zirkoniumverbindungen und gegebenenfalls ein vorgenanntes Element, wird gebildet;
- (b) die Mischung wird mit einer basischen Verbindung in Berührung gebracht, wodurch ein Niederschlag erhalten wird;
- (c) der Niederschlag wird in einem wässrigen Medium erhitzt; dann
- (d) entweder wird zuerst ein Additiv, ausgewählt aus anionischen grenzflächenaktiven Stoffen, nicht-ionischen grenzflächenaktiven Stoffen, Polyethylenglykolen, Carbonsäuren und ihren Salzen, und grenzflächenaktiven Stoffen vom Typ carboxymethylierter Fettalkoholethoxylate, dem Medium aus dem vorhergehenden Schritt zugesetzt, und anschließend wird der Niederschlag gegebenenfalls abgetrennt;
- (d') oder wird zuerst der Niederschlag abgetrennt und anschließend das Additiv dem Niederschlag zugesetzt;
- (e) der im vorhergehenden Schritt erhaltene Niederschlag wird einer Zerkleinerung unterzogen;
- (f) der so erhaltene Niederschlag wird in einem Inertgas oder im Vakuum zu einer ersten Zeit bei einer Temperatur von mindestens 850°C, dann in einer Oxidationsatmosphäre zu einer zweiten Zeit bei einer Temperatur von mindestens 400°C calciniert.

10. Verfahren zur Herstellung einer Zusammensetzung nach einem der vorhergehenden Ansprüche, **dadurch gekennzeichnet, dass** dieses die folgenden Schritte umfasst:
- (a) eine Mischung, umfassend Cerium-, Zirkoniumverbindungen und gegebenenfalls ein vorgenanntes Element, wird gebildet;
- (b) die Mischung wird erhitzt, wodurch ein Niederschlag erhalten wird;
- (c) entweder wird zuerst ein Additiv, ausgewählt aus anionischen grenzflächenaktiven Stoffen, nicht-ionischen grenzflächenaktiven Stoffen, Polyethylenglykolen, Carbonsäuren und ihren Salzen, und grenzflächenaktiven Stoffen vom Typ carboxymethylierter Fettalkoholethoxylate, dem Medium aus dem vorhergehenden Schritt zugesetzt, und anschließend wird der Niederschlag gegebenenfalls abgetrennt;
- (c') oder wird zuerst der Niederschlag abgetrennt und anschließend das Additiv dem Niederschlag zugesetzt;
- (d) der im vorhergehenden Schritt erhaltene Niederschlag wird einer Zerkleinerung unterzogen;
- (e) der so erhaltene Niederschlag wird in einem Inertgas oder im Vakuum zu einer ersten Zeit bei einer Temperatur von mindestens 850°C, dann in einer Oxidationsatmosphäre zu einer zweiten Zeit bei einer Temperatur von mindestens 400°C calciniert.

11. Verfahren nach Anspruch 9 oder 10, **dadurch gekennzeichnet, dass** als Zirkonium-, Ceriumverbindungen und vorgenanntes Element eine Verbindung verwendet wird, ausgewählt aus Nitraten, Sulfaten, Acetaten, Chloriden, ammoniakalischen Cer-Nitraten.

12. Verfahren nach einem der Ansprüche 9 bis 11, **dadurch gekennzeichnet, dass** das Erhitzen des Niederschlags in Schritt (c) oder der Mischung in Schritt (b) bei einer Temperatur von mindestens 100°C durchgeführt wird.

13. Verfahren nach einem der Ansprüche 9 bis 12, **dadurch gekennzeichnet, dass** eine feuchte Zerkleinerung durchgeführt wird.

14. Verfahren nach einem der Ansprüche 9 bis 13, **dadurch gekennzeichnet, dass** die Zerkleinerung durchgeführt wird, indem eine Suspension des Niederschlags einem Scheren unterzogen wird.

15. Verfahren nach einem der Ansprüche 9 bis 14, **dadurch gekennzeichnet, dass** ein Edelmetall dem Niederschlag aus Schritt (d) oder (d') oder aus Schritt (c) oder (c') zugesetzt wird.

16. Verfahren nach einem der Ansprüche 9 bis 15, **dadurch gekennzeichnet, dass** die erste Calcinierung in einem Inertgas oder im Vakuum bei einer Temperatur zwischen 850°C und 1100°C und die zweite Calcinierung in einer Oxidationsatmosphäre bei einer Temperatur zwischen 400°C und 900°C durchgeführt wird.

17. Katalytisches System, **dadurch gekennzeichnet, dass** dieses eine Zusammensetzung nach einem der Ansprüche 1 bis 8 umfasst.

18. Verfahren zur Behandlung von Abgasen von Verbrennungsmotoren, **dadurch gekennzeichnet, dass** als Katalysator ein katalytisches System nach Anspruch 17 oder eine Zusammensetzung nach einem der Ansprüche 1 bis 8 verwendet wird.

## Claims

1. Composition based on cerium oxide and zirconium oxide in a Ce/Zr atomic proportion of at least 1, **characterized in that** it exhibits, in combination, a degree of reducibility of at least 70% and a specific surface of at least 15 m²/g, the reducibility being determined by a measurement of the hydrogen consumption measured between 200°C and 900°C.

2. Composition according to Claim 1, **characterized in that** it exhibits a degree of reducibility of at least 75%.

3. Composition according to Claim 1 or 2, **characterized in that** it exhibits a specific surface of at least 20 m²/g.

4. Composition according to one of the preceding claims, **characterized in that** it exhibits a Ce/Zr atomic proportion of at most 1.4.

5. Composition according to one of the preceding claims, **characterized in that** it additionally comprises at least one other element chosen from the lanthanides other than cerium.

6. Composition according to Claim 5, **characterized in that** the content of the other abovementioned element is at most 20% and at least 1%, by weight, with respect to the whole of the composition.

7. Composition according to one of the preceding claims, **characterized in that** it exhibits a specific surface of between 15 m²/g and 60 m²/g.

8. Composition according to one of the preceding claims, **characterized in that** it additionally comprises at least one precious metal selected in particular from platinum, rhodium, palladium, iridium, silver or gold.

9. Process for the preparation of a composition according to one of the preceding claims, **characterized in that** it comprises the following stages:
- (a) a mixture comprising components of cerium, of zirconium and optionally of an abovementioned element is formed;
- (b) the said mixture and a basic compound are brought together, whereby a precipitate is obtained;
- (c) the said precipitate is heated in an aqueous medium; then
- (d) either an additive selected from anionic surfactants, nonanionic surfactants, polyethylene glycols, carboxylic acids and their salts and surfactants of the carboxymethylated fatty alcohol ethoxylates type is first added to the medium resulting from the preceding stage and the said precipitate is optionally subsequently separated;
- (d') or the said precipitate is first separated and the said additive is subsequently added to the precipitate;
- (e) the precipitate obtained in the preceding stage is subjected to milling;
- (f) the precipitate thus obtained is calcined under an inert gas or under vacuum in a first step at a temperature of at least 850°C and then under an oxidizing atmosphere in a second step at a temperature of at least 400°C.

10. Process for the preparation of a composition according to one of the preceding claims, **characterized in that** it comprises the following stages:
- (a) a mixture comprising components of cerium, of zirconium and optionally of an abovementioned element is formed;
- (b) the mixture is heated, whereby a precipitate is obtained;
- (c) either an additive selected from anionic surfactants, nonanionic surfactants, polyethylene glycols, carboxylic acids and their salts and surfactants of the carboxymethylated fatty alcohol ethoxylates type is first added to the medium resulting from the preceding stage and the said precipitate is optionally subsequently separated;
- (c') or the said precipitate is first separated and the said additive is subsequently added to the precipitate;
- (d) the precipitate obtained in the preceding stage is subjected to milling;
- (e) the precipitate thus obtained is calcined under an inert gas or under vacuum in a first step at a temperature of at least 850°C and then under an oxidizing atmosphere in a second step at a temperature of at least 400°C.

11. Process according to Claim 9 or 10, **characterized in that** use is made, as compounds of zirconium, cerium and the abovementioned element, of a compound selected from nitrates, sulfates, acetates, chlorides, ceric ammonium nitrates.

12. Process according to one of Claims 9 to 11, **characterized in that** the heating of the precipitate of stage (c) or of the mixture of stage (b) is carried out at a temperature of at least 100°C.

13. Process according to one of Claims 9 to 12, **characterized in that** a wet milling is employed.

14. Process according to one of Claims 9 to 13, **characterized in that** the milling is carried out by subjecting a suspension of the precipitate to shearing.

15. Process according to one of Claims 9 to 14, **characterized in that** a precious metal is added to the precipitate resulting from stage (d) or (d') or from stage (c) or (c').

16. Process according to one of Claims 9 to 15, **characterized in that** the first calcination is carried out under an inert gas or under vacuum at a temperature of between 850°C and 1100°C and the second calcination is carried out under an oxidizing atmosphere at a temperature of between 400°C and 900°C.

17. Catalytic system, **characterized in that** it comprises a composition according to one of Claims 1 to 8.

18. Process for the treatment of the exhaust gases from internal combustion engines, **characterized in that** use is made, as catalyst, of a catalytic system according to Claim 17 or of a composition according to one of Claims 1 to 8.
